# EUROPEAN PATENT APPLICATION

(11) **EP 4 530 049 A1**
(43) Date of publication of application: **02.04.2025**
(21) Application number: 23382979.5
(22) Date of filing: 27.09.2023
(51) Int. Cl.: B29C 65/34, B29C 65/08, B29C 65/20, B29C 65/36, B29C 65/76, F03D 1/06, B29K 307/04, B29K 309/08, B29L 31/08, B29K 31/00, B29K 33/00, B29K 63/00, B29K 75/00, B29K 433/04

(54) **METHOD OF MANUFACTURING A SPAR CAP, A RESPECTIVELY MANUFACTURED SPAR CAP AND A WIND TURBINE BLADE COMPRISING SAID SPAR CAP**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

A method of producing a spar cap or a part thereof comprises providing a plurality of structural elements (30) each comprising fibres and a weldable resin; arranging at least two of the structural elements (30) side by side, thereby forming a first layer (40); arranging at least two further structural elements (30) side by side, thereby forming a second layer (42); placing a resistive element (50) between the first and second layers (40, 42); and while pressing the first and second layers (40, 42) together, energising the resistive element (50) such that the weldable resin softens or melts, thereby joining the first and second layers (40, 42) of structural elements (30). The structural elements (30) may be pultrusion planks.

Also disclosed is a spar cap obtainable by this method as well as a wind turbine blade comprising such spar cap.

## Description

### Field of invention

The present invention relates to the field of wind turbine blades, in particular to a method of producing a spar cap or a part thereof and a respectively produced spar cap or a part thereof as well as a wind turbine blade comprising such a spar cap.

### Art Background

Wind power is considered one of the cleanest, most environmentally friendly energy sources presently available, and wind turbines have gained increased attention for utilizing this energy source. A modern wind turbine typically includes a tower, generator, gearbox, nacelle, and one or more rotor blades (which may also be referred to as wind turbine blades). The rotor blades capture kinetic energy of wind and transmit the kinetic energy in the form of rotational energy so as to turn a shaft coupling the rotor blades to a gearbox or directly to the generator. The generator then converts the mechanical energy to electrical energy that may be fed into a power grid.

As the wind energy sector progresses, the trend is to produce bigger wind turbine blades to reduce the cost of energy (COE) due to increased efficiency and production of larger rotors. The massive size of the blades combined with the need of optimized aerodynamic profiles drives the need for the use of carbon fiber material in the main structural elements of the blades, in particular the spar caps.

Carbon fibers have a unique combination of high modulus, high strength, fatigue resistance and low density that are applied for the optimization of large blade structures in combination typically with a polymer resin matrix to form a Carbon Fiber Reinforced Polymer (CFRP).

However, carbon fibers involve higher costs when compared with typical blade reinforcement materials such as glass fibers. A way to minimize the cost impact of the carbon material is to optimize the desired properties by means of increasing the carbon content of CFRP products and the alignment of the fibers, typically used unidirectionally (UD), resulting in the use of solid products such as pultrusions.

Pultrusions are solid planks typically rectangular in section, formed by carbon tows passed by a pulling force through a die impregnated in resin. After being pulled through the die (with the net shape of the final section) the resin solidifies by curing or polymerization, and a solid plank is formed. At a certain length the plank is cut and coiled for transportation. Typically for wind blade designs, these planks range from 2 to 7 mm thickness, 50 to 200 mm width and lengths up to or above 100 m.

The planks, as supplied, need to be processed to form the spar caps, which runs throughout almost the entire length of both the pressure and suction shells of the blade, taking most of the structural loads.

For forming a spar cap, a number of planks are needed, both width and thickness wise (depending on the blade design). As blade shells are commonly manufactured by Vacuum Assisted Resin Infusion Moulding (VARIM or simply "Infusion") the whole structure is commonly casted in a single infusion process into a main mold. To pack the planks directly in the mold to form the spar cap is challenging as the risk for misalignment, shifting of adjacent materials and/or infusion defects is high since they are not supported parts under pressure.

Defects and repairs in the carbon spar caps are commonly extremely difficult in practice and they suppose a significant cost, even leading to scrapping of the whole component if they are detected once in the final part.

Commonly in the wind industry to overcome this issue, the spar cap is formed out of the mold as a prefabricated part by a separate infusion process which involves the injection of a liquid polymer matrix (commonly a 2-part thermoset) that wets the spaces between the planks, which is then heated (either externally or by the self-induced resin reaction exothermic reaction heat) to cure the liquid compound into a solid matrix.

This matrix joins together the plank surfaces to form the homogeneous spar cap. As the pultruded planks are rigid parts which do not allow for the flow of resin under vacuum pressure, an additional layer of fabric is added between each layer (commonly a carbon fabric) to guarantee the required permeability for the resin flow and complete wetting of all layers.

The matrix itself and the interplank layers have stiffness and strength an order of magnitude below what the pultruded carbon planks have, and they do not add significant structural performance to the part or final product. Their only purpose is to form and hold the spar cap prefabricated component with enough mechanical properties to transfer the interlaminar loads between planks. In addition to that, they add non-functional weight to the final blade, which is a critical design factor for the blade and has an impact on the whole turbine as a system.

Thus, there may be a need for further improvements in the production of spar caps or parts thereof for wind turbine blades, in particular with regard to minimizing the amount of material at the plank interface, which does not add significant structural performance, thereby minimizing the spar plank mass and maximizing the mechanical performance. In addition, cost reduction by material savings of for instance vacuum materials, waste resin and vacuum film, as well as increased degree of automation may be desired. Still further, a simplified inspection of spar caps and repair of defects may be desired.

### Summary of the Invention

This need may be met by the subject matter according to the independent claims. Advantageous embodiments of the present invention are described by the dependent claims.

According to an aspect of the invention, there is provided a method of producing a spar cap or a part thereof, the method comprising providing a plurality of structural elements, each structural element comprising fibers, in particular reinforcement fibers, and a weldable resin, arranging at least two of the plurality of structural elements side by side (such as adjacent to each other), thereby forming a first layer of structural elements, arranging at least two of the plurality of structural elements side by side (such as adjacent to each other), thereby forming a second layer of structural elements, placing (or arranging) a resistive element between the first and the second layer of structural elements, pressing the first and the second layer of structural elements together and, at least for a part of time of the pressing, energizing (i.e. delivering energy to) the resistive element such that the weldable resin softens or melts (thereby joining the first and the second layer of structural elements).

According to a further aspect of the invention, there is provided a spar cap or a part thereof obtainable (or obtained) by a method as described herein.

According to a further aspect of the invention, there is provided a wind turbine blade comprising a first half-shell, a second half-shell, two spar caps, wherein at least one thereof is a spar cap as described herein, a leading edge, and a trailing edge.

These aspects of the invention are based on the idea that the structural elements mainly constituting the spar caps comprise a weldable resin, which may be softened or melted by means of a resistive element to which energy is delivered and which is arranged between two layers of these structural elements, thereby joining the layers with each other and building the spar caps in an efficient manner with a minimum of material in-between the layers of structural elements.

### Detailed Description

Hereinafter, details of the present invention and other features and advantages thereof will be described. However, the present invention is not limited to the following specific descriptions, but they are rather for illustrative purposes only.

It should be noted that features described in connection with one exemplary embodiment or exemplary aspect may be combined with any other exemplary embodiment or exemplary aspect, in particular features described with any exemplary embodiment of a method of producing a spar cap or a part thereof may be combined with any other exemplary embodiment of a method of producing a spar cap or a part thereof and with any exemplary embodiment of a spar cap or a part thereof, with any exemplary embodiment of a wind turbine blade and vice versa, unless specifically stated otherwise.

Where an indefinite or definite article is used when referring to a singular term, such as "a", "an" or "the", a plural of that term is also included and vice versa, unless specifically stated otherwise.

The expression "comprising", as used herein, includes not only the meaning of "comprising", "including" or "containing", but may also encompass "consisting essentially of" and "consisting of".

Unless specifically stated otherwise, the expression "at least partially", "at least a partial" or "at least (a) part of", as used herein, may mean at least 5 % thereof, in particular at least 10 % thereof, in particular at least 15 % thereof, in particular at least 20 % thereof, in particular at least 25 % thereof, in particular at least 30 % thereof, in particular at least 35 % thereof, in particular at least 40 % thereof, in particular at least 45 % thereof, in particular at least 50 % thereof, in particular at least 55 % thereof, in particular at least 60 % thereof, in particular at least 65 % thereof, in particular at least 70 % thereof, in particular at least 75 % thereof, in particular at least 80 % thereof, in particular at least 85 % thereof, in particular at least 90 % thereof, in particular at least 95 % thereof, in particular at least 98 % thereof, and may also mean 100 % thereof.

In a first aspect, a method of producing a spar cap or a part thereof is provided.

The term, "spar cap" as used herein may in particular denote a part of a wind turbine blade, which in particular contributes to the mechanical properties and integrity of the wind turbine blade. A spar cap is typically located at that position of a wind turbine blade where the wind turbine blade has its largest thickness.

The method comprises a step of providing a plurality of structural elements. The structural elements are not particular limited as long as they comprise fibers and a weldable resin. Advantageously, the structural elements have a cuboidal shape with a length that is (largely) greater than a width and a depth. In an embodiment, the structural elements have a length up to 100 m length, a width of from 50 to 200 mm and a thickness of from 2 to 7 mm. For instance, the length may be 100 m, the width may be 100 mm and the thickness may be 5 mm. It may be advantageous if (substantially) all or at least more than 90 % of the plurality of structural elements have substantially the same dimensions. It might however also be possible to use structural elements of different dimensions, depending on the design demands. The structural elements may also be referred to herein as boards, planks, pultruded planks or pultrusions.

The structural element comprises fibers, in particular reinforcement fibers. The fibers may be arranged in groups, bundled to form a thicker tow or roving.

In an embodiment, the fibers comprise at least one of glass fibers and carbon fibers. While carbon fibers are advantageous due to their high modulus, high strength, fatigue resistance and low density, the inventive technique described herein is also suitable for glass fibers, which are advantageous in terms of costs.

The structural element further comprises a weldable resin. The term, "weldable resin" as used herein may in particular denote a resin or polymer material that becomes molten or at least softened upon application of heat, and shows the opposite behavior when cooled down, so that it can be used for welding together or joining two components, for instance two layers of structural elements.

In an embodiment, the weldable resin comprises a thermoplastic polymer or a modified thermoset polymer. A thermoplastic polymer is a plastic polymer material that becomes pliable or moldable at a certain elevated temperature and solidifies upon cooling. A suitable example for a thermoplastic polymer includes poly(methyl methacrylate) (PMMA). In contrast to a thermoplastic polymer, a thermoset polymer, which may also be referred to as thermosetting polymer, thermoset resin or simply a thermoset, is a polymer that is irreversibly hardened by curing from a soft solid or viscous liquid prepolymer or resin. However, a modified thermoset polymer that allows for bond exchange under temperature, e.g. vitrimers, may also be suitable for use as a weldable resin.

In an embodiment, one or more of the plurality of structural elements, in particular all of the plurality of structural elements, comprise at least one of the following structures or setups 1) to 4):
1) The fibers are embedded in the weldable resin. In this setup, the structural element may not comprise a thermoset resin, but substantially consist of fibers and a weldable resin.
2) The fibers are embedded in a thermoset resin thereby forming a core of the structural element and the (entire) core of the structural element is coated or covered by a layer of the weldable resin. In this setup, the fibers are embedded in a thermoset resin, which may be advantageous in terms of mechanical integrity, and the outer surface of the structural element is made of a weldable resin, thereby allowing versatile joining of the structural element.
3) The fibers are embedded in a thermoset resin thereby forming a core of the structural element and one main surface of the core of the structural element is coated or covered by a layer of the weldable resin. Thus, the fibers are again embedded in a thermoset resin, but in this setup only one main surface is provided with weldable resin, thereby enabling a tailored joining of the structural element.
4) The fibers are embedded in a thermoset resin thereby forming a core of the structural element and both main surfaces of the core of the structural element are coated or covered by a layer of the weldable resin. Thus, the fibers are again embedded in a thermoset resin, but in this setup both main surfaces are provided with weldable resin so that the structural element may for instance be appropriately used in a stack or sandwich configuration.

In an embodiment, (substantially) all or at least more than 80 %, in particular more than 90 % of the plurality of structural elements have the same type of setup. It might however also be suitable to combine different types of setup. For example, it might be advantageous to use structural elements having at least one of the setups 1), 2) and 4) in the interior of the spar cap and to use structural elements having the setup 3), i.e. where one main surface of the structural element is free of weldable resin, at an outer surface of the spar cap. Moreover, it might also be suitable to use some structural elements that do not comprise a weldable resin, for instance structural elements comprising fibers and a thermoset resin. Such non-weldable structural elements may nevertheless be joined with other structural elements comprising a weldable resin by their weldable resin and/or by an additional filler material comprising a weldable resin (to be discussed in further detail below).

In an embodiment, the thermoset resin comprises at least one resin selected from the group consisting of an epoxy resin, a vinylester resin and a polyurethane resin.

The method further comprises a step of arranging at least two of the plurality of structural elements side by side (such as adjacent to each other), thereby forming a first layer of structural elements. In an embodiment, at least three, in particular at least four, in particular at least five, in particular at least six, such as up to 100, in particular up to 50, in particular up to 25 in particular up to 10, of the plurality of structural elements may be arranged side by side so as to form a first layer of structural elements. While not excluded, the individual structural elements do not need to be adhered or otherwise fixed to each other when arranged side by side.

The method further comprises a step of arranging at least two of the plurality of structural elements side by side (such as adjacent to each other), thereby forming a second layer of structural elements. In an embodiment, at least three, in particular at least four, in particular at least five, in particular at least six, such as up to 100, in particular up to 50, in particular up to 25 in particular up to 10, of the plurality of structural elements may be arranged side by side so as to form a second layer of structural elements. While not excluded, the individual structural elements do not need to be adhered or otherwise fixed to each other when arranged side by side.

The method further comprises a step of placing or arranging a resistive element between the first and the second layer of structural elements. The term, "resistive element" as used herein may in particular denote an element that is electrically or thermally conductive. For instance, the resistive element may be electrically conductive and can produce heat by means of the Joule effect. The heat may be produced for instance by an electrical current or voltage that is applied to the resistive element.

In an embodiment, the resistive element is arranged along the entire length of the first and second layers of structural elements. In particular, the resistive element may be arranged throughout the entire boundary surface or interface of the first and second layers of structural elements. In some embodiments, it might be advantageous if the resistive element laterally protrudes from the first and second layers of structural elements (i.e. in the width direction).

In an embodiment, the resistive element comprises carbon fibers, a metallic material or any other (electrically and/or thermally) conductive material.

In an embodiment, the resistive element is in the form of a mesh, for instance a corrosion resistant steel wire mesh, a woven or non-woven fabric, for instance a fabric of carbon fibers.

In an embodiment, the resistive element is directly arranged between the first and the second layer of structural elements, i.e. without any intervening elements or layers between the resistive element and the first layer of structural elements as well as without any intervening elements or layers between the resistive element and the second layer of structural elements. By taking this measure, the interplank material may be kept minimum.

In another embodiment, the process may further comprise, in particular before pressing the first and the second layer of structural elements together, a step of placing or arranging a filler material between the resistive material and the first and/or the second layer of structural elements. In particular, the filler material may comprise a weldable resin. It might be advantageous in some embodiments to provide additional weldable resin by means of a filler material, in particular if the structural elements used comprise only an amount of weldable resin that is insufficient for joining the two layers of structural elements or if some structural elements are used that do not comprise a weldable resin. The filler material may be applied as a coating to the resistive element, where for instance the mesh or fabric is embedded into the added weldable resin, or as a solid film added at either side (or both) of the resistive element.

The method further comprises a step of pressing the first and the second layer of structural elements together. In other words, pressure is applied onto the first and the second layer of structural elements so that they are compressed or pressed together. For instance, a pressure in the range of 1 to 3 bar may be applied.

In an embodiment, the first and the second layer of structural elements are pressed together by means of rollers. Advantageously, the rollers are displaceable arranged relative to the first and the second layer of structural elements along a translatory direction of movement, which allows a constant pressure maintained during the same time to ensure a continuous and homogenous welding.

The method further comprises, at least for a part of time of the pressing, a step of energizing the resistive element such that the weldable resin softens or melts. "Energizing the resistive element" in particular means that energy in general is delivered to the resistive element and shall not be limited to the application of electrical energy. For instance, the resistive element may be provided with electrical, thermal or any other suitable energy. As a result of the step of energizing, the first and the second layer of structural elements are joined together.

In an embodiment, voltage or electrical energy is applied to the resistive element so that electrical current passes through the resistive element. In other words, a power source may be used to energize the resistive element. To this end, the resistive element exhibits connection points for electrically connecting the power source to the resistive element. For instance, the resistive element laterally protrudes from the first and second layers of structural elements (i.e. in the width direction) allowing an electric contact to the power source.

In another embodiment, energizing the resistive element comprises induction welding. To this end, one or more inductors may be arranged on top of the first and second layers of structural elements and heating of the resistive layer is caused by an alternating electromagnetic field generated by the inductor(s).

In another embodiment, energizing the resistive element comprises ultrasonic welding. To this end, one or more sonotrodes may be arranged on top of the first and second layers of structural elements and heating of the resistive layer is caused by high frequency sound waves generated by the sonotrode(s).

In another embodiment, energizing the resistive element comprises continuous filament welding. To this end, a heated filament or wire moves in the longitudinal direction of the first and second layers of structural elements and heats the weldable resin. The filament is connected to a power source that generates heat through the Joule effect until the weldable resin melts.

In another embodiment, energizing the resistive element comprises hot plate welding. To this end, a heated plate is placed between the first and the second layer of structural elements to melt the interface weldable resin locally. The plate may be heated by the application of current or by direct heat conduction from a heated surface. The plate is then removed once enough time is given to fully soften the interface and pressure is applied to the heated zone until material is properly diffused.

In an embodiment, the method further comprises a step of arranging at least two of the plurality of structural elements side by side (such as adjacent to each other), thereby forming a third layer of structural elements, placing arranging a further resistive element between the second and the third layer of structural elements, pressing the second and the third layer of structural elements together and, at least for a part of time of the pressing, energizing the further resistive element such that the weldable resin softens or melts (thereby joining the first, the second and the third layer of structural elements). Similarly, a fourth, fifth, sixth, etc. layer of structural elements may be joined. Thus, the height of the spar cap may be increased by adding further layers of structural elements as desired.

In a further aspect, a spar cap or a part thereof is obtainable or is obtained by a method as described in the foregoing. The resistive element used for producing the spar cap (or the part thereof) remains in and thus forms part of the thus obtained spar cap (or the part thereof). Moreover, at the end of the lifecycle of the spar cap, the resistive element may be used again for separating the layers, for instance by application of voltage, thereby facilitating recycling and recovery of materials of the spar cap or a part thereof.

In a further aspect, a wind turbine blade is provided which comprises a first half-shell, a second half-shell, two spar caps, a leading edge and a trailing edge. At least one, preferably two, of the spar caps is obtained by a method as described in the foregoing.

### Brief description of the drawings

Fig. 1 schematically illustrates a wind turbine.
Fig. 2 schematically illustrates a wind turbine blade according to an exemplary embodiment.
Fig. 3 schematically illustrates an exploded view of the wind turbine blade according to Fig. 2.
Fig. 4 schematically illustrates a cross-sectional side view of the wind turbine blade along the intersection line IV-IV of Fig. 2.
Fig. 5 schematically illustrates a plan view of a structural element suitable for use in a method of producing a spar cap or a part thereof according to an exemplary embodiment.
Fig. 6 schematically illustrates cross-sectional side views of different setups of a structural element according to an exemplary embodiment.
Fig. 7 schematically illustrates cross-sectional side views of intermediates in the method of producing a spar cap or a part thereof according to an exemplary embodiment.
Fig. 8 schematically illustrates cross-sectional side views of filler material according to an exemplary embodiment.
Fig. 9 schematically illustrates a plan view of an intermediate in the method of producing a spar cap or a part thereof according to an exemplary embodiment.
Fig. 10 schematically illustrates a cross-sectional side view of an intermediate in the method of producing a spar cap or a part thereof according to an exemplary embodiment.
Fig. 11 schematically illustrates a cross-sectional side view of an intermediate in the method of producing a spar cap or a part thereof according to an exemplary embodiment.
Fig. 12 schematically illustrates a plan view of a process step in the method of producing a spar cap or a part thereof according to an exemplary embodiment.
Fig. 13 schematically illustrates a cross-sectional side view of the process step shown in Fig.12.
Fig. 14 schematically illustrates a cross-sectional side view of a final product, which may also act as an intermediate, of the method of producing a spar cap or a part thereof according to an exemplary embodiment.
Fig. 15 schematically illustrates a cross-sectional side view of a deconstruction of a spar cap according to an exemplary embodiment.

### Detailed description of the drawings

The illustration in the drawings is schematical. In different drawings, similar or identical elements are provided with the same reference signs.

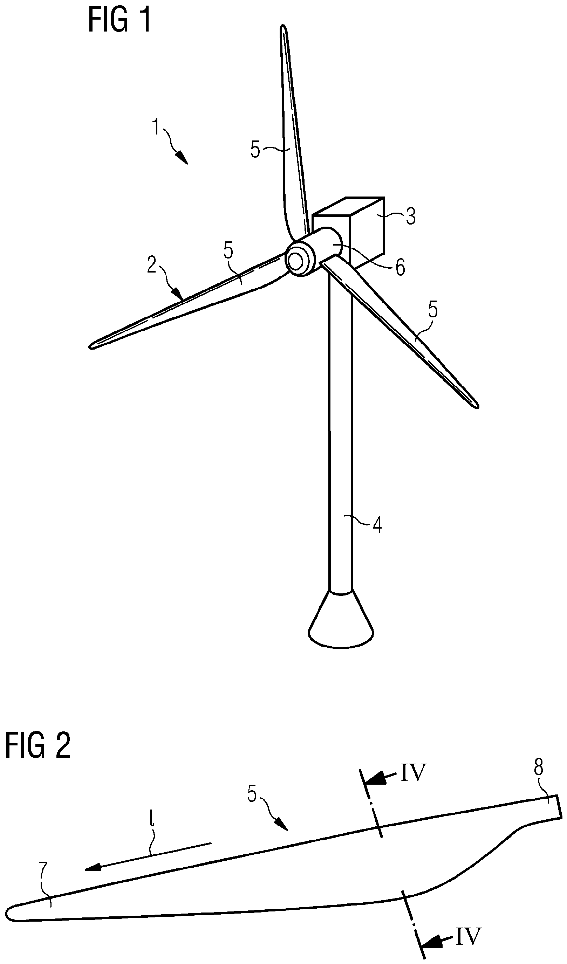

Fig. 1 schematically illustrates a wind turbine 1. A wind turbine refers to an apparatus converting the wind's kinetic energy into rotational energy, which may again be converted to electrical energy by the apparatus. The wind turbine 1 comprises a rotor 2 connected to a generator (not shown) arranged inside a nacelle 3. The nacelle 3 is arranged at the upper end of a tower 4 of the wind turbine 1. The rotor 2 comprises three wind turbine blades 5. The wind turbine blades 5 are connected to a hub 6 of the wind turbine 1. Rotors 2 of this kind may have diameters ranging from, for example, 30 to 160 meters or even more. The wind turbine blades 5 are subjected to high wind loads. At the same time, the wind turbine blades 5 need to be lightweight. For these reasons, wind turbine blades 5 in modern wind turbines 1 are manufactured from fiber-reinforced composite materials. Of-tentimes, glass fibers in the form of unidirectional fiber mats are used.

Fig. 2 schematically illustrates a wind turbine blade 5 according to an embodiment. The wind turbine blade 5 comprises an aerodynamically designed portion 7, which is shaped for optimum exploitation of the wind energy and a blade root 8 for connecting the wind turbine blade 5 to the hub 6. The wind turbine blade 5 comprises a longitudinal direction l.

The longitudinal direction 1 is directed from the blade root 8 in direction of the aerodynamically designed portion 7.

However, the longitudinal direction 1 can be oriented vice versa. These wind turbine blades 5 are hollow composite structures intended to be as lightweight and stiff as possible to maximize the mechanical energy transfer from wind to the generator. To manufacture the hollow structure, the universally most used materials are composite materials where a reinforcement fiber is embedded into a polymeric matrix.

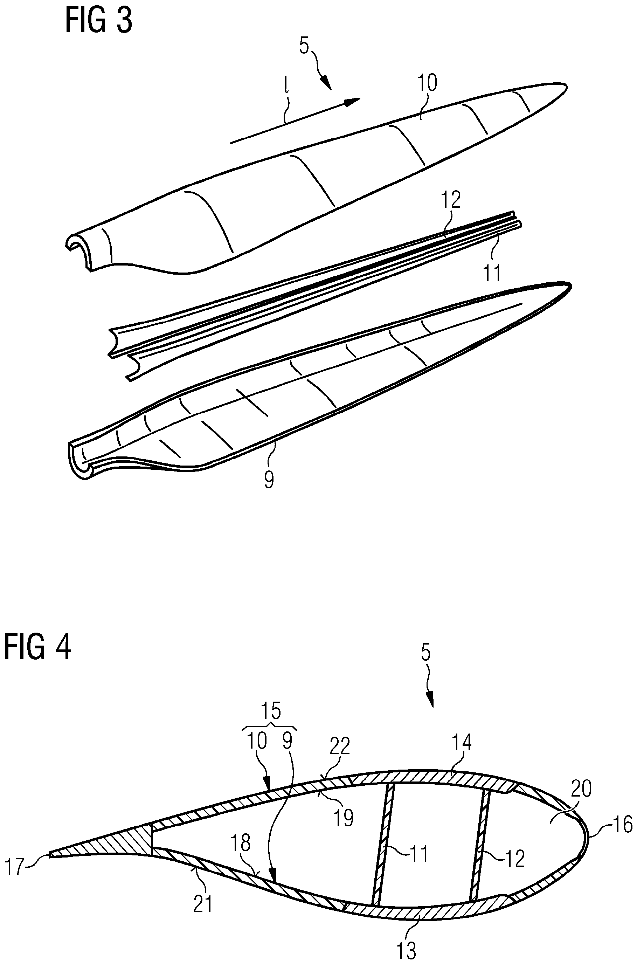

Fig. 3 schematically illustrates an exploded view of the wind turbine blade 5 according to Fig. 2. The options for joining, bonding, or welding the hollow structures of the wind turbine blade 5 are so far limited to either create the entire structure in a one-shot molding process which is technically complex and requires specialized tooling or join sub-parts - most commonly blade half-shells 9, 10 - by means of an adhesive bonding process performed using also a thermoset material. A first half-shell 9 of the wind turbine blade 5 is manufactured and cured in parallel to a second half-shell 10.

Then both half-shells 9, 10 and additional structural elements 11, 12, such as shear webs, are joined together using said adhesive bonding process. The half-shells 9, 10 can have integrated spar caps 13, 14 (Fig. 4).

Fig. 4 schematically illustrates a cross-sectional side view of the wind turbine blade along the intersection line IV-IV of Fig. 2. The wind turbine blade 5 has an outer blade shell 15 comprising the first half-shell 9 and the second half-shell 10, which are connected to each other at a leading edge 16 of the wind turbine blade 5. The half-shells 9, 10 are also connected to each other at a trailing edge 17 of the wind turbine blade 5. The outer blade shell 15 may comprise composite fiber material, in particular glass fiber fabrics. The fiber material is impregnated with a polymer material, in particular with a thermoset resin. The first half-shell 9 constitutes a pressure side of the wind turbine blade 5. The second half-shell 10 constitutes a suction side of the wind turbine blade 5. The first half-shell 9 comprises an inner surface 18 and the second half-shell 10 comprises an inner surface 19 being arranged opposite to each other and facing each other. An inner space 20 of the wind turbine blade 5 is defined by means of the inner surfaces 18, 19. The first half-shell 9 comprises an outer surface 21 that faces away from the inner surface 18. The second half-shell 10 comprises an outer surface 22 that faces away from the inner surface 19. The structural elements 11, 12 are located inside the inner space 20 extending from the inner surface 18 of the first half-shell 9 to the inner surface 19 of the second half-shell 10. The structural elements 11, 12 and the spar caps 13, 14 run in the longitudinal direction l. The structural elements 11, 12 and the spar caps 13, 14 preferably comprise fiber composite material, in particular glass fiber fabrics or carbon fibers. The structural elements 11, 12 are shear webs.

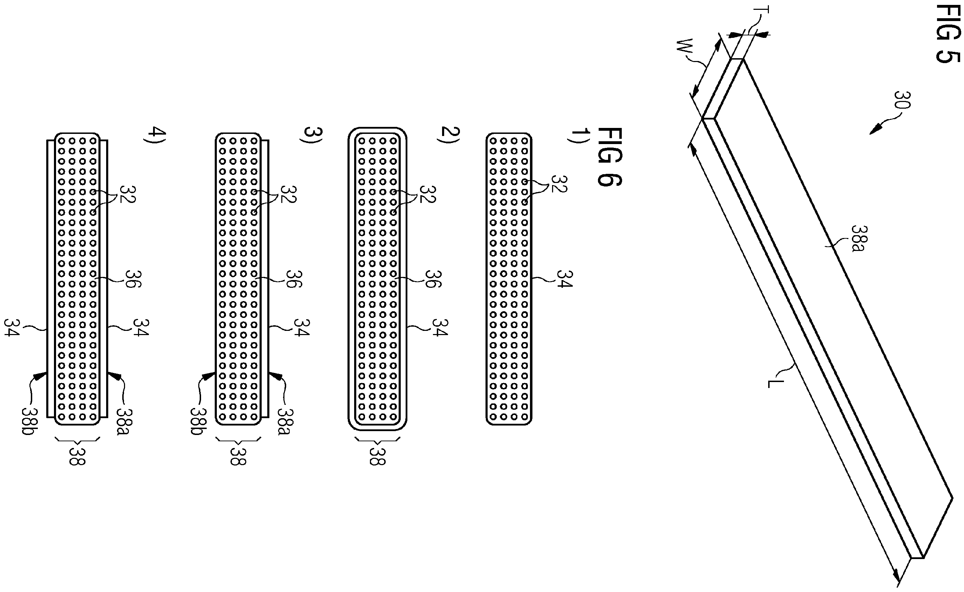

Fig. 5 schematically illustrates a plan view of a structural element 30 suitable for use in a method of producing a spar cap or a part thereof according to an exemplary embodiment. The structural element 30 has a cuboidal shape with a length L that is largely greater than a width W and a depth T. For instance, the length L may be 100 m, the width W may be 100 mm and the thickness T may be 5 mm. The structural element 30 has two main surfaces, wherein only an upper main surface 38a is shown in Fig. 5, whereas a lower main surface is opposite to the upper main surface 38a and therefore not shown in Fig. 5. The structural element 30 is a fiber-reinforced composite composed of a unidirectional fiber (such as carbon fiber or glass fiber) and a matrix. The unidirectional fiber is embedded in the matrix typically by means of a pultrusion process, but other processes (such as extrusion, winding, wet molding) are also possible for manufacturing the structural element 30.

Fig. 6 schematically illustrates cross-sectional side views of different setups of a structural element 30 according to an exemplary embodiment.

In setup 1), the fibers 32 are embedded in a weldable resin 34. The weldable resin 34 may comprise a thermoplastic polymer or a modified thermoset polymer and the fibers 32 are reinforcement fibers, for instance glass fibers or carbon fibers. In this setup, the structural element 30 may not comprise a thermoset resin, but substantially consist of fibers 32 and a weldable resin 34.

In setup 2), the fibers 32 are embedded in a thermoset resin 36 thereby forming a core 38 of the structural element 30 and the (entire) core 38 of the structural element 30 is coated or covered by a layer of the weldable resin 34. In other words, the core 38 of the structural element 30 comprises the fibers 32 embedded in the thermoset resin 36. The thermoset resin 36 may comprise at least one resin selected from the group consisting of an epoxy resin, a vinylester resin and a polyurethane resin. In this setup, the fibers 32 are embedded in a thermoset resin 36, which may be advantageous in terms of mechanical integrity, and the outer surface of the structural element 30 is made of a weldable resin 34, thereby allowing versatile joining of the structural element 30.

In setup 3), the fibers 32 are embedded in a thermoset resin 36 thereby forming a core 38 of the structural element 30 and one main surface 38a of the core 38 of the structural element 30 is coated or covered by a layer of the weldable resin 34. Thus, the fibers 32 are again embedded in a thermoset resin 36, but in this setup only one main surface 38a is provided with weldable resin 34, whereas the other main surface 38b is free of weldable resin thereby enabling a tailored joining of the structural element 30.

In setup 4), the fibers 32 are embedded in a thermoset resin 36 thereby forming a core 38 of the structural element 30 and both main surfaces 38a, 38b of the core 38 of the structural element 30 are coated or covered by a layer of the weldable resin 34. Thus, the fibers 32 are again embedded in a thermoset resin 34, but in this setup both main surfaces 38a, 38b are provided with weldable resin 34 so that the structural element 30 may for instance be appropriately used in a stack or sandwich configuration.

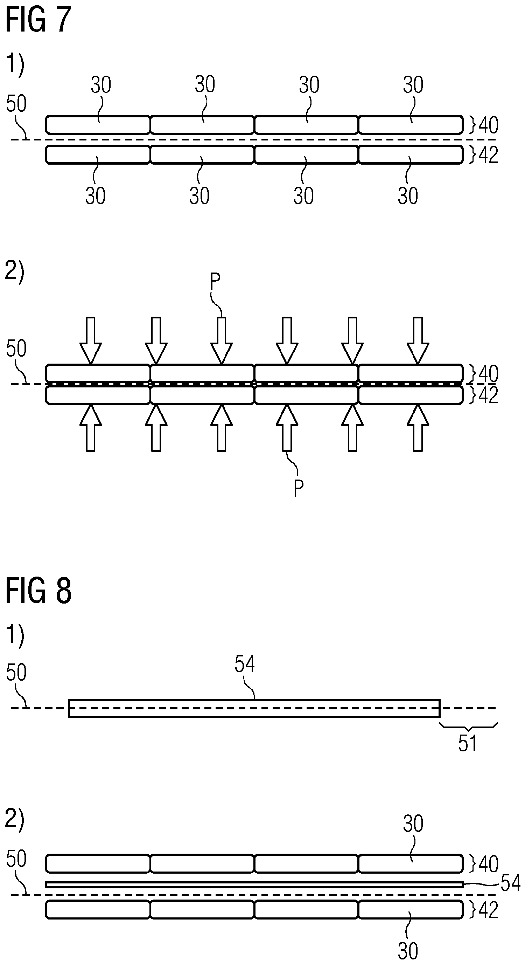

Fig. 7 schematically illustrates cross-sectional side views of intermediates in the method of producing a spar cap or a part thereof according to an exemplary embodiment.

In 1), a plurality of structural elements 30, more specifically four structural elements 30 in the depicted illustration, are arranged side by side to give a first layer of structural elements 40. Moreover, a further plurality of structural elements 30, more specifically four structural elements 30 in the depicted illustration, are arranged side by side to give a second layer of structural elements 42. The first and the second layer of structural elements 40, 42 are arranged one upon the other and a resistive element 50 is arranged in-between the first and the second layer of structural elements 40, 42. The resistive element 50 is in the form of a mesh, a woven or non-woven fabric and preferably comprises carbon fibers, a metallic material or any other conductive material characterized by a resistance value.

In 2), the first and the second layer of structural elements 40, 42 are pressed together with a controlled amount of surface pressure P to compress both contact surfaces into the intermediate layer of the resistive element 50. For instance, a pressure P in the range of from 1 to 3 bar may be applied.

Fig. 8 schematically illustrates cross-sectional side views of filler material according to an exemplary embodiment. In some embodiments, a filler material 54 (typically comprising a weldable resin) may be arranged between the resistive material 50 and the first and/or the second layer of structural elements 40, 42, for instance if the structural elements used comprise only an amount of weldable resin that is insufficient for joining the two layers of structural elements or if some structural elements are used that do not comprise a weldable resin.

In 1), the filler material 54 is applied as a coating to the resistive element 50, where for instance the mesh or fabric is embedded into the added weldable resin and the edges or lateral extensions, i.e. lateral protrusions of the resistive element 51, are exposed for electrical connectivity.

In 2), the filler material 54 is applied as a solid film added at either side (or both) of the resistive element 50, i.e. arranged between the resistive element 50 and the first and/or the second layer of structural elements 40, 42.

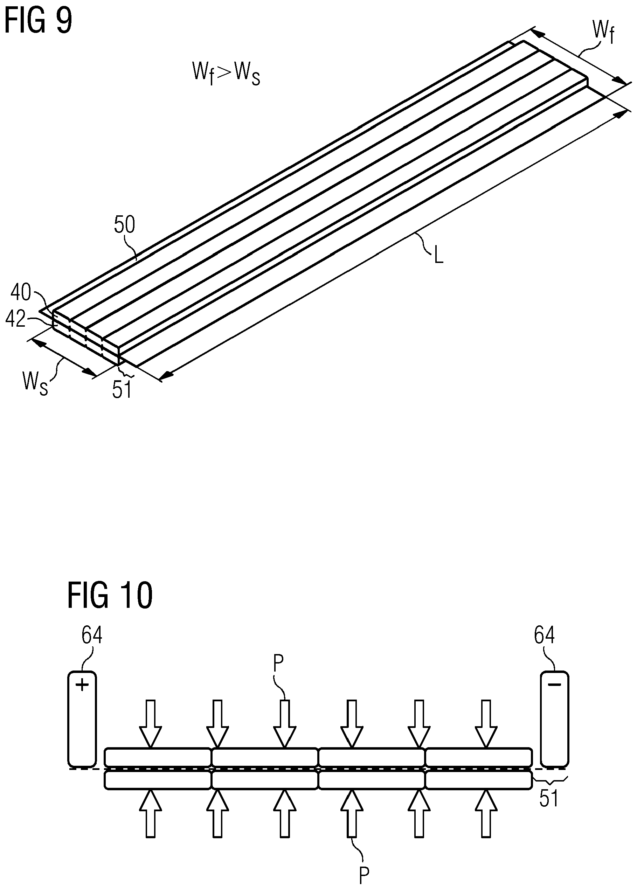

Fig. 9 schematically illustrates a plan view of an intermediate in the method of producing a spar cap or a part thereof according to an exemplary embodiment. A resistive element 50, for instance a mesh or fabric of resistive material, is arranged between a first and a second layer of structural elements 40, 42. The resistive element 50 is arranged such that it laterally protrudes from the transversal edges of the first and or the second layer of structural elements 40, 42.

In other words, a width W_{f} of the resistive element 50 is larger than a width Wₛ of the stack of the first and or the second layer of structural elements 40, 42. The resulting lateral protrusions of the resistive element 51 are advantageous if electrical current or voltage is to be applied for energizing the resistive element 50 in that the lateral protrusions of the resistive element 51 may serve as electrical connection.

Fig. 10 schematically illustrates a cross-sectional side view of an intermediate in the method of producing a spar cap or a part thereof according to an exemplary embodiment. In Fig. 10 and further to Fig. 7 2), the lateral protrusions of the resistive element 51 are brought in contact with connectors 64 which are conductive elements connected to a power source (not shown), while maintaining the stack of the first and or the second layer of structural elements 40, 42 and the resistive element 50 under pressure. The connectors are polarized so as to pass an electrical current in the transversal direction.

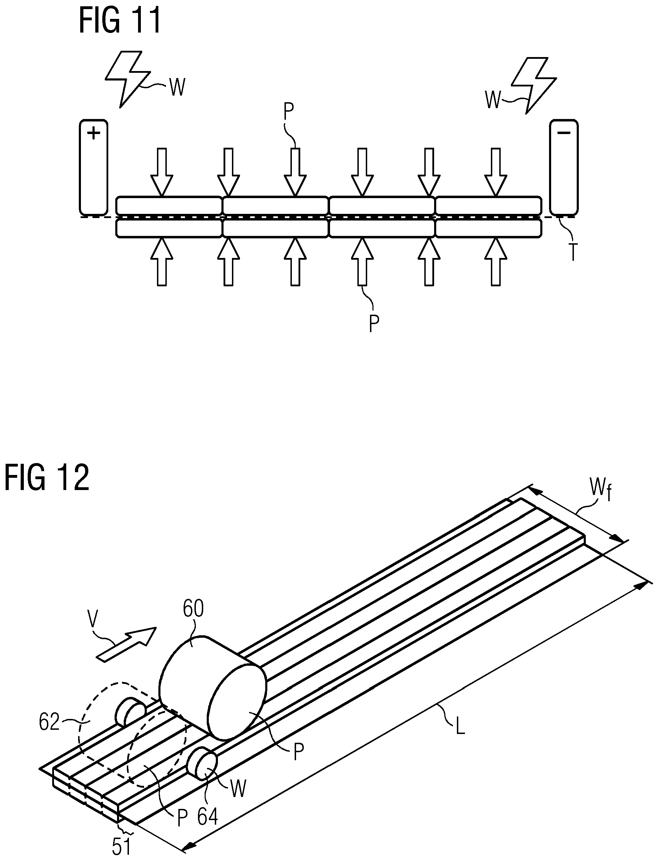

Fig. 11 schematically illustrates a cross-sectional side view of an intermediate in the method of producing a spar cap or a part thereof according to an exemplary embodiment. In Fig. 11 and further to Fig. 10, a specific amount of power W is applied causing heating to a determined temperature T in the resistive element due to the Joule Effect. The heating causes the weldable resin layer to flow to a point where the fusion of the contacting layers starts. The current under pressure is maintained for enough time to allow for the complete molecular diffusion between the joining surfaces and consolidation of the weld line.

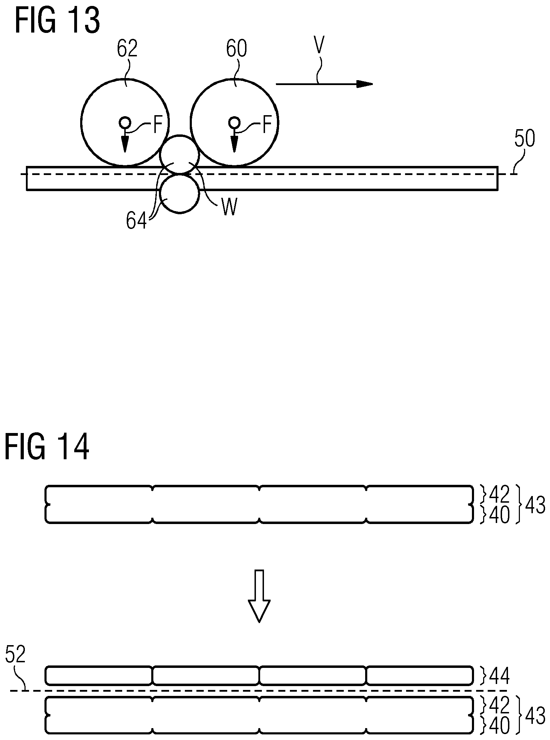

Fig. 12 schematically illustrates a plan view of a process step in the method of producing a spar cap or a part thereof according to an exemplary embodiment. Fig. 13 schematically illustrates a cross-sectional side view of the process step shown in Fig.12. The joining step (i.e. pressing together and heating) may be carried out in a continuous manner by using cylinders or rollers 60, 62 to apply locally the pressure P, with a pre-compaction roller 60, a consolidation roller 62 or both at the same time, moving at a speed V. The rollers 60, 62 might be designed to act as a heat sink if required. The current W can be applied by conductors 64, such as conductive wheels, in local contact with the lateral protrusions of the resistive element 51. The entire setup is then translated by rotation throughout the entire length of the of the structural elements L, maintaining at each section a constant P and W during the same time to ensure a continuous and homogeneous weld.

Fig. 14 schematically illustrates a cross-sectional side view of a final product, which may also act as an intermediate, of the method of producing a spar cap or a part thereof according to an exemplary embodiment. Once the process is finished, and the heat affected zone is cooled down, both layers of structural elements 40, 42 are joined together in full. The resistive element (not shown) is embedded in the weldable resin, forming a homogeneous joint. The lateral protrusions of the resistive element (not shown) may be trimmed. The thus obtained joined layers 43 may represent a final product, i.e. a spar cap or a part thereof. However, if a thicker spar cap or part thereof is desired, the process may also be continued by repeating process steps. More specifically, a third layer of structural elements 44 may be provided by arranging respective structural elements side by side and a further resistive element 52 may be arranged between the third layer of structural elements 44 and the joined layers 43, followed by pressing the layers together and energizing the further resistive element 52. In fact, the process may be repeated in successive layers to obtain the end thickness of the spar cap as designed. Once the desired thickness of the spar cap is achieved through repetition of the process, the result would be a homogeneous light-weight spar cap product with minimal non-structural material added.

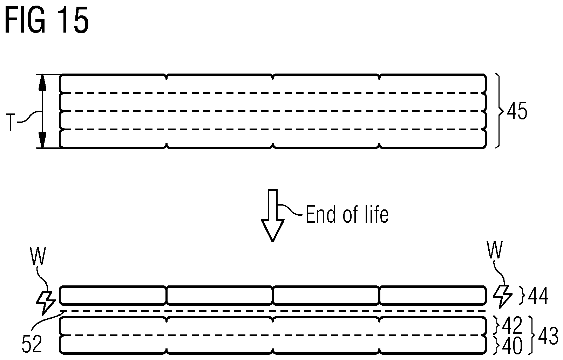

Fig. 15 schematically illustrates a cross-sectional side view of a deconstruction of a spar cap according to an exemplary embodiment. At the end of the life cycle of the spar cap, the resistive element 52 can be used again for separation of each layer, by re-connecting to a current.

While the present invention has been described in detail by way of specific embodiments and examples, it should be appreciated the invention is not limited thereto and various alterations and modifications are possible, without departing from the scope of the invention.

## Claims

1. A method of producing a spar cap (13, 14) or a part thereof, the method comprising:
providing a plurality of structural elements (30), each structural element comprising fibers (32) and a weldable resin (34);
arranging at least two of the plurality of structural elements (30) side by side, thereby forming a first layer of structural elements (40);
arranging at least two of the plurality of structural elements side by side, thereby forming a second layer of structural elements (42);
placing a resistive element (50) between the first and the second layer of structural elements (40, 42);
pressing the first and the second layer of structural elements (40, 42) together and, at least for a part of time of the pressing, energizing the resistive element (50) such that the weldable resin (34) softens or melts.

2. The method as set forth in claim 1, wherein the fibers (32) comprise at least one of glass fibers and carbon fibers.

3. The method as set forth in claim 1 or claim 2, wherein one or more of the plurality of structural elements (30), in particular all of the plurality of structural elements (30), comprise at least one of the following structures:
- the fibers (32) are embedded in the weldable resin (34);
- the fibers (32) are embedded in a thermoset resin (36) thereby forming a core (38) of the structural element and the entire core (38) of the structural element is coated by a layer of the weldable resin (34);
- the fibers (32) are embedded in a thermoset resin (36) thereby forming a core (38) of the structural element and one main surface (38a) of the core (38) of the structural element is coated by a layer of the weldable resin (34);
- the fibers (32) are embedded in a thermoset resin (36) thereby forming a core (38) of the structural element and both main surfaces (38a, 38b) of the core (38) of the structural element are coated by a layer of the weldable resin (34).

4. The method as set forth in any one of claims 1 to 3, wherein the weldable resin (34) comprises a thermoplastic polymer or a modified thermoset polymer.

5. The method as set forth in claim 3 or claim 4, wherein the thermoset resin (36) comprises at least one resin selected from the group consisting of an epoxy resin, a vinylester resin and a polyurethane resin.

6. The method as set forth in any one of claims 1 to 5, wherein the resistive element (50) comprises carbon fibers, a metallic material or any other conductive material.

7. The method as set forth in any one of claims 1 to 6, wherein the resistive element (50) is in the form of a mesh, a woven or non-woven fabric.

8. The method as set forth in any one of claims 1 to 7, the method further comprising:
before pressing the first and the second layer of structural elements (40, 42) together, placing a filler material (54) between the resistive element (50) and the first and/or the second layer of structural elements (40, 42).

9. The method as set forth in claim 8, wherein the filler material (54) comprises a weldable resin (34).

10. The method as set forth in any one of claims 1 to 9, wherein the first and the second layer of structural elements (40, 42) are pressed together by means of rollers (60, 62), which are in particular displaceable arranged relative to the first and the second layer of structural elements (40, 42) along a translatory direction of movement.

11. The method as set forth in any one of claims 1 to 10, wherein energizing the resistive element (50) comprises at least one of the following:
- applying voltage to the resistive element (50)
- induction welding;
- ultrasonic welding;
- continuous filament welding;
- hot plate welding.

12. The method as set forth in any one of claims 1 to 11, the method further comprising:
arranging at least two of the plurality of structural elements (30) side by side, thereby forming a third layer of structural elements (44);
placing (arranging) a further resistive element (52) between the second and the third layer of structural elements (42, 44);
pressing the second and the third layer of structural elements (42, 44) together and, at least for a part of time of the pressing, energizing the further resistive element (52) such that the weldable resin (34) softens or melts.

13. A spar cap (13, 14) or a part thereof obtainable by a method according to any one of claims 1 to 12.

14. A wind turbine blade (5) comprising:
a first half-shell (9),
a second half-shell (10),
two spar caps (13, 14), wherein at least one thereof is a spar cap according to claim 13;
a leading edge (16); and
a trailing edge (17).
